Europäisches Patentamt

European Patent Office

Office européen des brevets

(19)

(11) Veröffentlichungsnummer: **0 453 435 A2**

(12) **EUROPÄISCHE PATENTANMELDUNG**

(21) Anmeldenummer: 91890048.1

(22) Anmeldetag: 19.03.91

(51) Int. Cl.⁵: **G01K 17/06**

(30) Priorität: 11.04.90 AT 865/90

(43) Veröffentlichungstag der Anmeldung:
23.10.91 Patentblatt 91/43

(84) Benannte Vertragsstaaten:
AT CH DE FR IT LI SE

(71) Anmelder: AUSTRIA EMAIL EHT AG
Breitenseer Strasse 76-80
A-1140 Wien (AT)

(72) Erfinder: Pennerstorfer, Walter, Dipl.-Ing.
Dornbacherstrasse 93
A-1170 Wien (AT)
Erfinder: Tafner, Friedrich, Ing.
Schubertstrasse 26
A-8720 Knittelfeld (AT)

(74) Vertreter: Köhler-Pavlik, Johann, Dipl.-Ing.
Margaretenplatz 5
A-1050 Wien (AT)

(54) Messwerterfassungssystem.

(57) Meßwerterfassungssystem für den Wärmeinhalt des Mediums wärmespeichernder Geräte, wie beispielsweise Warmwasserbereiter, Nacht- oder Pufferspeicher, mit einem Meßfühler zur Ermittlung des Wärmeinhaltes, wobei eine elektronische Schaltung (5) vorgesehen und mit dem Meßfühler (4) verbunden ist, in welcher die Masse oder das Volumen sowie charakteristische Temperaturwerte des Mediums, vorzugsweise die Ladetemperatur und die Abgabetemperatur sowie allenfalls charakteristische Mengeneinheiten des Mediums, repräsentiert sind und die das Signal des Meßfühlers unter Berücksichtigung der repräsentierten Werte in ein dem Wärmeinhalt des Mediums in einer vorbestimmten Einheit proportionales Signal umwandelt.

EP 0 453 435 A2

Fig.1

7"  7'  7‴

Die Erfindung betrifft ein Meßwerterfassungssystem nach dem Oberbegriff des Patentanspruches 1.

Bei den herkömmlichen Geräten der eingangs angeführten Art war lange Zeit eine analoge Temperaturskala die einzig übliche Anzeige. Oftmals war oder ist diese nicht einmal mit absoluten Zahlenwerten versehen, sondern ist lediglich piktogrammartig gestaltet. Als weitere Informationsquelle diente bestenfalls noch das Regelelement für die Temperatureinstellung, auf welchem die Heizstufen markiert sind, ebenfalls oft ohne absolute Zahlenwerte anzugeben. Doch auch Temperaturanzeigesysteme, die die absolute Temperaturen angeben, sagen nichts über den Wärmeinhalt des Mediums aus, da sie die Temperatur nur an einem oder mehreren Meßpunkten erfassen und die Feststellung oder Abschätzung des Wärmeinhaltes dem Benützer überlassen bleibt. Hiebei ist es gleichgültig, ob Zeigerthermometer mit Bimetall- oder Kapillarrohrfühlern oder elektronische Systeme mit Fühlern auf Basis einer elektrischen Meßwertveränderung, d.h. Thermoelemente, vorgesehen sind.

Daher sind in weiterer Folge Wärmeinhaltsanzeigesysteme entwickelt worden. Eine Gruppe davon arbeitet gleichfalls auf Bimetallbasis. Hierbei wird eine Längenänderung über eine Hebelübersetzung zur Anzeige des Wärmeinhaltes verwendet, wobei der Zeigerausschlag durch das erforderliche Übersetzungsverhältnis von etwa 1 : 15 sehr ungenau und wenig verläßlich ist. Auch Anzeigesysteme, die den Wärmeinhalt über einen Widerstandsdraht ermitteln, sind zur Zeit nur mit relativ geringen Auflösungen, d.h. grobstufiger Rasterung der Anzeige, möglich. Überdies kann es bei fehlendem Bezug auf eine Temperaturmessung zu einer irreführenden Anzeige des Wärmeinhaltes kommen, da ein bestimmter Wärmeinhalt mit verschiedenen Temperatur-Mengen-Verhältnissen erreicht werden kann. Ein niedriger Wärmeinhalt kann einerseits durch viel Medium niedriger Temperatur, als auch durch wenig Medium mit hoher Temperatur erreicht werden. Dieser Unterschied ist jedoch für viele Anwendungen sehr bedeutsam.

Beispielhaft sei dies am Fall eines Warmwasserbereiters erläutert. Zum Baden und Duschen muß eine bestimmte Wassermenge mit einer vorgegebenen Mindesttemperatur verfügbar sein. Ist lediglich der Wärmeinhalt bekannt, kann zwar wenig, aber dafür heißes Wasser bereitstehen, das zu ausreichend warmem Brauchwasser mischbar ist. Allerdings kann auch viel Wasser vorhanden sein, das aber unterhalb der Mindesttemperatur liegt und daher für dem genannten Zweck nicht brauchbar ist.

In der EP-OS 286 193 wird eine Vorrichtung zur Erfassung des Wärmeinhaltes eines flüssigkeitsgefüllten Behälters beschrieben. Zu diesem Zweck ist ein länglicher Temperaturfühler vorgesehen, welcher ein der Durchschnittstemperatur entlang seiner Länge proportionales Signal erzeugt. Dieses Signal wird einer elektronischen Schaltung zugeführt, welche eine dem Signal proportionale Anzahl von Leuchtdioden einschaltet. Diese einfache Schaltung läßt allerdings außer Acht, daß für den Benützer der absolute Wärmeinhalt eigentlich von sekundärer Bedeutung ist. Ein bestimmter Wert des Wärmeinhaltes kann nämlich auf zwei verschiedene Arten erzielt werden. Einerseits kann das gesamte Wasser im Speicher im wesentlichen die gleiche Temperatur aufweisen, andererseits kann das Wasser eine Temperaturschichtung aufweisen, bei welcher Bereiche mit unter der Durchschnittstemperatur liegendem Wasser als auch Bereiche mit oberhalb dieser Durchschnittstemperatur liegendem Wasser vorhanden sind. Während der Wärmeinhalt im ersten Fall noch deutlich über dem Minimalwert liegen kann, ist es bei gleichmäßiger Temperaturverteilung aber leicht möglich, daß die Temperatur des gesamten Wasservorrates unter der der für den vorgesehenen Zweck, beispielsweise Dusch- oder Wannenbäder, geforderten Abgabetemperatur liegt und somit nicht nützbar ist.

Wenn aber, wie dies im zweiten beschriebenen Fall vorkommen kann, auch nur eine gegenüber der Gesamtwassermenge geringe Menge relativ heißen Wassers vorhanden ist, kann diese durch Mischung mit Kaltwasser auf eine größere Menge Wasser mit zumindest der geforderten Abgabetemperatur ergänzt werden. Bei der, in der EP-OS angegebenen Anordnung ist eine Unterscheidung zwischen den beiden beschriebenen Vaianten zum Zustandekommen eines bestimmten Wertes für die Wärmemenge nicht möglich. Daher ist der Benutzer nie sicher, ob lt. angezeigtem Wärmeinhalt auch wirklich für den geforderten Zweck ausreichend temperiertes Wasser in ausreichender Menge zur Verfügung steht.

Die US-PS 4 459 040 beschreibt eine Vorrichtung zur Messung und Anzeige der relativen Energie in einer Wärmespeichereinheit. Dabei ist ein nicht näher definierter Temperaturfühler mit einer Schaltung verbunden, welche eine dem Signal dieses Fühlers proportionale Anzahl von Leuchtdioden einschaltet. Der Wert für die obere und untere Grenztemperatur kann dabei vom Benützer mittels zweier Einstellknöpfe justiert werden. Da die Aufgabe der genannten US-PS darin besteht, anzuzeigen, wann von einer bestimmten Energieform zur Beheizung der Wärmespeichereinheit auf eine andere Energieform umgeschaltet werden soll, ist der Wärmeinhalt (d.h. der Bezug auf eine bestimmte Mengeneinheit des Speichermediums) nicht notwendig.

Die Umrechnung in einfach deutbare Mengeneinheiten mit vorgegebener Temperatur ist auch bei der Einrichtung gemäß der DE-OS 14 73 315 nicht möglich. Weiters sind bei dieser Einrichtung zwei Meßfühler notwendig, einer für die Messung der Maximaltemperatur und ein weiterer für die Bestimmung des Temperaturmittelwertes. Letzterer kann auch durch eine Meßkette aus mehreren miteinander verbundenen Fühlern realisiert sein. Die Repräsentierung charakteristischer Temperatur- bzw. Mengenwerte des Mediums und die darauf basierende Anzeige von verfügbarem Wasser in vorbestimmten Mengeneinheiten ist auch gemäß der letzteren Offenlegungsschrift nicht vorgesehen und von dieser auch nicht nahegelegt.

Die Aufgabe der vorliegenden Erfindung war es, ein Meßwerterfassungssystem zu entwerfen, welches eine feinstufige Erfassung des Wärmeinhaltes des Mediums ermöglicht, wobei in einfacher Weise das Meßsignal zur Anzeige des Wärmeinhaltes in beliebigen vorbestimmten Einheiten, zu Regelzwecken od. dgl. weiterverwendbar ist.

Die gestellte Aufgabe wird erfindungsgemäß durch die Maßnahme nach dem kennzeichnenden Teil des Patentanspruches 1 gelöst.

Das erfindungsgemäße Meßwerterfassungssystem erlaubt eine Erfassung des Signales eines Fühlers für den Wärmeinhalt, wobei zusätzlich durch Berücksichtigung der Werte für Masse bzw. Volumen des Mediums sowie einer Referenztemperatur und beliebig vorgebbaren Mengeneinheiten die Bestimmung des Wärmeinhaltes in Form benützerfreundlicher, weil in beliebig vorbestimmbaren, Einheiten ermöglicht ist. Im Falle eines Warmwasserbereiters ist somit zum Beispiel die Ermittlung der Menge von Warmwasser mit einer vorbestimmbaren Temperatur, etwa 40°C, zum Baden oder Duschen, und/oder die Bestimmung der Anzahl der noch verfügbaren Wannen-und/oder Duschbäder durch Berücksichtigung der entsprechenden Wassermengen, etwa 160 l bzw. 40 l, durchführbar.

Die erfindungsgemäße Maßnahme gestattet es somit dem Benützer anzuzeigen, ob und für wieviele Dusch- oder Wärmebäder der Wärmeinhalt des Kessels noch ausreicht.

Die Maßnahme nach Anspruch 6 ermöglicht es, den Wärmeinhalt in einfach erfaßbare Form umzuwandeln und anzuzeigen, vorzugsweise mit der Möglichkeit, die zu seiner Bestimmung herangezogenen Größen ebenfalls anzuzeigen.

Durch das Merkmal des Anspruches 9 ist es möglich, das Meßwerterfassungssystem derart zu gestalten, daß es in das Temperaturregelsystem des wärmespeichernden Gerätes einbindbar ist.

Nach den Weiterausbildungen der Erfindung ist vorteilhafterweise eine Ausgabeeinheit angeschlossen, welche das Signal des Meßwerterfassungssystems übernimmt und vorzugsweise optisch, prinzipiell jedoch in beliebiger Form ausgibt oder anzeigt.

Schließlich ist auch die Einbindung des erfindungsgemäßen Meßwerterfassungssystems in das Temperaturregelsystem des Gerätes in vorteilhafter Weise möglich. Dadurch ist ohne großen zusätzlichen Aufwand eine Nachladung des Gerätes auch bei nur geringfügiger Entladung, bei welcher die herkömmlichen Regelsysteme meist nicht ansprechen, einleitbar.

Weitere Vorteile der Erfindung werden durch die in den Ansprüchen 2 bis 5,7,8 und 10 gekennzeichneten Merkmale erzielt.

Das in den Patentansprüchen 11 bis 15 beschriebene Verfahren zum Betreiben des Meßwerterfassungssystems gemäß der Erfindung ermöglicht die rasche und Schwankungen rasch folgende Erfassung und Anzeige des Meßwertes sowie die Einbeziehung des System zur Regelung des wärmespeichernden Gerätes.

In der nachfolgenden Beschreibung wird unter Bezugnahme auf die Zeichnungen ein Ausführungsbeispiel der Erfindung näher erläutert.

Es zeigen

Fig. 1 ein Schema des erfindungsgemäßen Meßwerterfassungssystems für den Wärmeinhalt nach einer vorteilhaften Ausführungsform mit gleichzeitiger Einbindung in ein Anzeige- und Temperatur-Regelsystem des wärmespeichernden Gerätes,

Fig. 2 ein einfaches Ausführungsbeispiel für eine diskrete Schaltung des erfindungsgemäßen Systems und

Fig. 3 eine um die Möglichkeit der Temperaturerfassung und -anzeige erweiterte diskrete Schaltung.

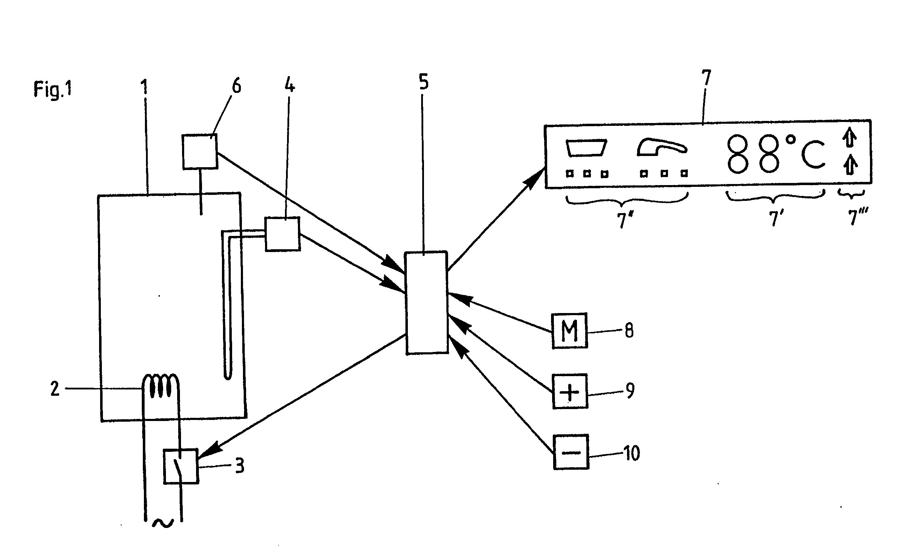

In Fig. 1 bezeichnet 1 den Kessel eines beliebigen wärmespeichernden Gerätes, in dem sich das die Wärme aufnehmende Medium, meist Wasser, befindet. In weiterer Folge soll die Erfindung beispielhaft anhand eines Warmwasserbereiters, etwa für den Sanitärbereich, beschrieben werden, gleichwohl deren Verwendung auch bei ähnlichen Geräten, wie Nacht- oder Pufferspeicher, oder anderen wärmespeichernden Medien, wie etwa Gasen oder Thermoölen, denkbar ist.

Der besagte Kessel 1 wird durch beliebige, vorzugsweise steuerbare Wärmequellen, meist durch elektrische Widerstandsheizungen mit Heizelementen 2 und diese steuernde Schalt- bzw. Regelkreise 3, beheizt. Die Steuerung kann in herkömmlicher Weise über Relais oder Schütze, über Triacs oder auch Thyristoren erfolgen. Dabei wird das im Kessel befindliche Wasser auf eine vorwählbare Temperatur, im folgenden Ladetemperatur genannt, gebracht. Der Meßfühler 4 auf Basis eines Widerstandsdrahtes dient der Ermittlung des Wärmeinhaltes des Wassers im Kessel und ist direkt mit einer elektronischen Schaltung 5 verbunden.

Obwohl die Ermittlung des Wärmeinhaltes über die Widerstandsänderung eines Materials entlang einer bestimmten Länge in Abhängigkeit von der pro Längenelement herrschenden Temperatur die eleganteste und vorteilhafteste Methode darstellt, ist das erfindungsgemäße System keinesfalls darauf beschränkt. So sind auch Halbleiterelemente bzw. Ketten von Halbleiter-Elementen denkbar oder können Längenänderungen eines Materials bzw. Druckänderungen eines Materials, etwa in Kapillarrohr- oder Piezoelementen, in elektrische Signale umgewandelt und der Schaltung 5 zugeleitet werden.

Die Schaltung fragt vorzugsweise periodisch den Meßfühler 4 ab, allenfalls auch andere vorhandene Fühler zur Bestimmung weiterer Parameter, wobei die Intervalle zwischen zwei Abfragen vorzugsweise 10 bis 30 Sekunden betragen. Bei starken Änderungen des Meßwertes wird die Zeit zwischen zwei Abfragen gemäß einer vorteilhaften Variante verringert, vorzugsweise auf 2 bis 10 Sekunden, wodurch die jeweils aktuellen Parameter rascher vorliegen und weiter verarbeitet werden können.

In der Schaltung 5, welcher die Signale des Meßfühlers 4 übermittelt werden, sind nun Werte für die Masse oder das Volumen des Wassers im Kessel 1 sowie charakteristische Temperaturwerte, vorzugsweise die besagte Ladetemperatur und die gewünschte Abgabetemperatur des Wassers, repräsentiert. Weiters können, was im speziellen Fall für Warmwasserbereiter im Sanitärbereich von Bedeutung ist, auch charakteristische Mengeneinheiten des Mediums berücksichtigt sein. Beispielsweise sollten die Wassermengen für Wannen- oder Duschbäder in irgendeiner Weise in der Schaltung repräsentiert sein, um dem Benützer über die mit dem vorhandenen Wärmeinhalt noch möglichen Wannen- bzw. Duschbäder informieren zu können. Dies kann auf verschiedene Weise realisiert werden, wobei zwei bevorzugte Ausführungsbeispiele dargestellt werden sollen.

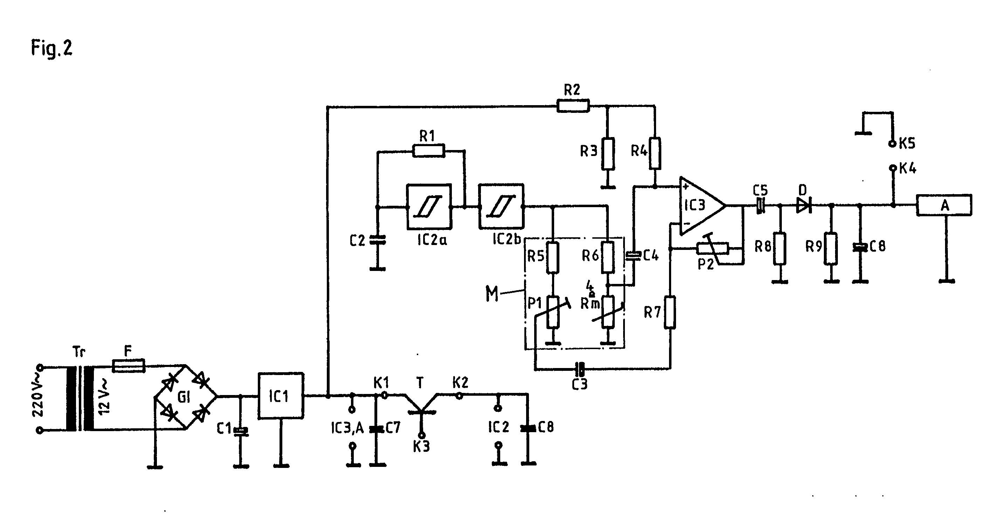

Eine einfache Variante ist die Ausführung der Schaltung 5 mit Hilfe herkömmlicher elektronischer Bauteile, d.h. einer sogenannten diskreten Schaltung. Ein Beispiel hierfür ist in Fig. 2 dargestellt. Die Stromversorgung erfolgt über einen Netzanschluß, wobei ein Transformator Tr, vorzugsweise mit nachgeschalteter Sicherung F, einer Gleichrichterschaltung G 1, einem Ladekondensator C1 und einem Spannungsstabilisator IC 1 angeschlossen sind. Andererseits ist eine Versorgung auch über Batterien oder Akkumulatoren od. dgl. denkbar. Eine Oszillatorstufe, beispielsweise gebildet aus dem Signalgenerator IC 2a zusammen mit R 1 und C 2, erzeugt Rechteckimpulse für eine Meßbrückenschaltung M, wobei diese Impulse durch den Schnitt-Trigger IC 2b gepuffert werden.

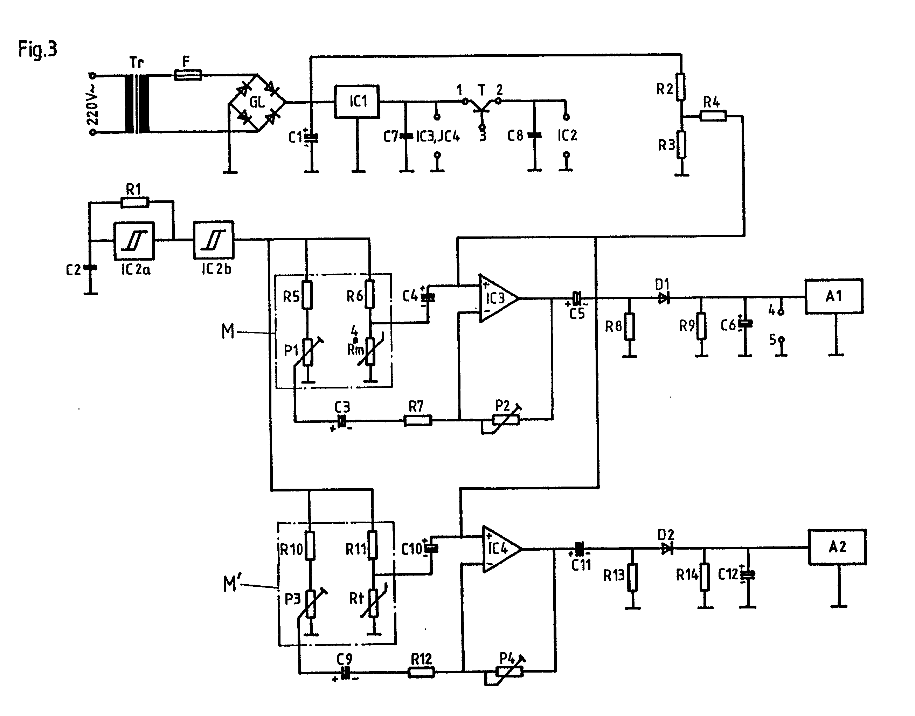

Die Meßbrückenschaltung M selbst, als Beispiel für eine beliebige Vergleichsschaltung, wird durch die Widerstände R 5, R 6, P 1 und den Meßfühler 4, der durch den Widerstand Rm in Fig.2 und Fig.3 charakterisiert ist, gebildet. Dabei ist P 1 ein einstellbarer Widerstand und gestattet den Nullspannungsabgleich. Die Ausgangsspannung der Meßbrücke M wird über die Kondensatoren C 3 und C 4 eine prinzipiell beliebige Verstärkerstufe, z.B. an den Operationsverstärker IC 3 angekoppelt, dessen Arbeitspunkt mittels geeigneter Wahl der Widerstände R 2 und R 3 einstellbar ist. Die Verstärkung wird dabei durch den fixen Widerstand R 7 und den einstellbaren Widerstand P 2 bestimmt. Über den Kondensator C 5 wird die verstärkte Meßwechselspannung ausgekoppelt, von der Diode D gleichgerichtet und von einem weiteren Kondensator C 6 geglättet, sodaß sie an den Kontakten K 4 und K 5 zur beliebigen weiteren Verwendung bzw. beispielsweise für eine Anzeigeeinrichtung A beliebiger Art zur Verfügung steht.

Damit der Meßbereich in Abhängigkeit von externen Steuerungen geändert werden kann, bietet die dargestellte Schaltung die Möglichkeit, durch Anlegen einer Spannung am Kontakt K 3 den Meßbereich an die Betriebsbedingungen anzupassen. Ist dies unerwünscht, so entfällt der Transistor T und der Kontakt K 1 wird direkt mit Kontakt K 2 verbunden.

Die gleichgerichtete und geglättete Spannung des Operationsverstärkers IC 3 kann, wie dargestellt, zur Anzeige des Wäreminhaltes verwendet werden. Die in Fig. 2 dargestellte Anzeige A ist ein Spezialfall für eine beliebige Ausgabeeinheit 7, wie sie in Fig. 1 allgemeiner gezeigt ist, und die gemäß einer vorteilhaften Ausführungsform der Erfindung in der elektronischen Schaltung 5 inkludiert ist.

Fig. 3 zeigt eine erweiterte diskrete Schaltung, in welcher zusätzlich zur Ermittlung des wäreminhaltes auch die Temperatur des Mediums, vorzugsweise die Maximaltemperatur im wärmsten Bereich des Kessels gemessen und angezeigt wird. Dazu ist die Schaltung aus Fig. 2 um eine Meßbrücke M' erweitert, in der Rt den Widerstand eines Temperatur-Meßfühlers, in Fig. 1 mit 6 bezeichnet, charakterisiert. Auch hierbei ist das Meßprinzip nicht auf die Verwendung eines Widerstandsdrahtes beschränkt. Vielmehr können Halbleitersensoren, NTC (Negative Temperature Coefficient)- bzw. PTC (Positive Temperature Coefficient)-Fühler od. dgl. vorgesehen sein.

Die Meßbrücke M' umfaßt darüberhinaus noch die fixen Widerstände R 10 und R 11, sowie den einstellbaren Widerstand P 3, welcher auch in der zweiten Meßbrücke den Nullpunktsabgleich gestattet. Die nachgeordneten Bauteile, wie der Operationsverstärker IC 4, die Kondensatoren C 9, C 10, C 11 und C 12 sowie die Widerstände P 4, R 12, R 13 und R 4 als auch die Diode D 2 und die Anzeige A 2 entsprechen den er ersten Meßbrücke M folgenden Elementen IC 3, C 3, C 4, C 5 und C 6, P 2, R 7, R 8, R 9, D I und A, deren Funktion schon bei der Beschreibung der Fig. 2 erläutert wurde.

Als optische Anzeigen A 2 kommen beispielsweise LED-Balken- oder -Segment-Anzeigen zur Darstellung von Buchstaben, Zahlen bzw. Symbolen, LC-Balken- oder Segment-Anzeigen, Punktmatrix-Anzeigen, Analoginstrumente, Piktogrammdarstellungen, Verweiszeiger auf Piktogramme oder Text am Rand der Anzeige auf LED- oder LC-Basis und dergleichen mehr in Frage. Allenfalls kann zusätzlich eine akustische Ausgabeeinheit, beispielsweise unter Verwendung eines Sprachgenerators, vorhanden sein oder die optische Anzeige gänzlich ersetzen. In Fig. 1 ist beispielhaft eine optische Ausgabeeinheit 7 mit Möglichkeit der Darstellung von Zahlen in Siebensegment-Anzeige 7', von Piktogrammen mit LED- oder LC-Punkten 7" sowie zusätzlichen Symbolen 7"', deren Bedeutung später erläutert wird, angegeben.

Der Wärmeinhalt des Wassers im Warmwasserbereiter wird in dem in Fig. 1 gezeigten Beispiel durch die unter den Piktogrammen liegenden Punkte mit den Piktogrammen selbst dargestellt, wobei die Anzahl der verfügbaren Wannen- bzw. Duschbäder durch die Anzahl der aufleuchtenden Punkte beim jeweiligen Piktogramm angegeben wird. Um diese Werte bestimmen zu können, müssen die Kenngrößen der Bauelemente der Schaltung von Fig. 2 oder Fig. 3 derart gewählt werden, daß für die jeweilige Kesselgröße, d.h. das Volumen bzw. die Masse des Wassers, Ladetemperatur und die vorbestimmte Ausgabetemperatur des Wassers bzw. die für Wannen- oder Duschbäder vorgesehenen Wassermengen die an die Anzeige angelegte Spannung zwischen zwei für die jeweilige Anzeige feststehenden Werten variiert. Dies erfordert für jeden Bautyp des Warmwasserbereiters eine spezifisch aufgebaute Schaltung.

Aus diesem Grund ist gemäß einer alternativen Ausführungsform der Meßfühler 4 über einen A/D-Wandler mit einem Mikroprozessor verbunden, welche beide in der Schaltung 5 enthalten sind. Der Mikroprozessor enthält hierbei ein Verarbeitungsprogramm, welches zuerst den Meßfühler periodisch, analog zur diskreten Schaltung abfrägt und in weiterer Folge einen dem Wärmeinhalt des Mediums in einer vorbestimmten Einheit proportionalen Wert berechnet. Bei dieser Variante ist es in vorteilhafter Weise möglich, eine mit dem Mikroprozessor verbundene Speichereinrichtung in die Schaltung 5 zu integrieren, in welcher zumindest die Werte für die Masse oder das Volumen des Wassers, allenfalls auch für die Ladetemperatur, die Abgabetemperatur oder die Wassermengen für Wannen- oder Duschbäder abgelegt sind.

Der Vorteil dieser Anordnung besteht darin, daß nur ein Verarbeitungsprogramm nötig ist und die Anpassung der Schaltung an verschiedene Gerätegrößen und Betriebsparameter durch Austauschen oder Umprogrammieren der Speichereinrichtung erfolgen kann und nicht etwa die gesamte Schaltung neu konzipiert und angefertigt werden muß. Anstatt in einem separaten Speicher können die besagten, zur Berechnung benötigten Werte auch im Mikrorechner selbst, innerhalb des Verarbeitungsprogrammes vorhanden sein. Für die Ausgabe oder allgemein die Weiterverwendung des durch den Mikroprozessor ermittelten Wertes für den Wärmeinhalt gilt das für die diskrete Schaltung gesagte. Allerdings bieten die vielfältigen Möglichkeiten der Formatierung des Ausgangssignals durch den Rechner einen viel weiteren Anwendungsbereich, beispielsweise unter Einsatz von weiteren Zusatzeinrichtungen wie D/A-Wandler, Code-Umsetzer od. dgl.

Bei allen Realisierungsmöglichkeiten des erfindungsgemäßen Meßwerterfassungssystems, welche die Ausgabe der berechneten Werte beinhalten, kann gemäß einer vorteilhaften Variante vorgesehen sein, nicht nur den Wert für den Wärmeinhalt sondern auch einen oder mehrere der anderen Meßwerte oder Betriebsparameter auszugeben. Daher können Schaltelemente 9 vorgesehen sein, um die Anzeige auf verschiedene Anzeigemoden umzuschalten, wobei die aktuelle Temperatur, vorzugsweise über den zusätzlichen Meßfühler 6 ermittelt, die Ladetemperatur und dergleichen ausgegeben werden können. Zumindest ein Schaltelement, vorzugsweise zwei Tasten 9, 10, sind zur Ansteuerung des Mikrorechners oder der Speichereinrichtung zum Verändern zumindest eines der gespeicherten Werte vorhanden. Die besagten Schaltelemente können auch dazu dienen, die Anzeige zu aktivieren, bzw. die Ausgabe der anzuzeigenden Werte einzuleiten, falls dies nicht automatisch oder vom Verarbeitungsprogramm initiiert erfolgt. Gemäß einer weiteren Variante wird auch die Abfrage des Meßfühlers erst von einem Schaltelement eingeleitet.

Eine weitere Anwendung des erfindungsgemäßen Meßwerterfassungssystems bietet sich in der Einbeziehung in das Temperaturregelsystem bzw. die Steuerung der Heizung des wärmespeichernden Gerätes. Dazu weist die Schaltung 5 einen Steuerausgang auf, welcher mit der Heizungssteuerschaltung 3 bzw. dem Regelkreis der Heizung verbunden ist und mit dem Signal des Wärmeinhaltes diese Elemente ansteuert. Diese Variante bietet mehrere Vorteile. Einerseits kann der in der Schaltung repräsentierte bzw. gespeicherte Wert der Ladetemperatur den Vorgabewert für die Heizung bilden. Dabei ist durch Verstellung dieses Parameters über die Schaltelemente 9, 10 gleichzeitig in einfacher Art und Weise die Heizung einstellbar, ohne daß ein separates Einstellelement, etwa ein Drehpotentiometer oder ähnliches, notwendig ist. Bei vorhandenem Meßfühler 6 für die Temperatur des Mediums ermöglicht die Schaltung 5 bei einer gewissen Unterschreitung des Wärmeinhaltswertes für Volladung die Veranlassung der Nachladung, obwohl der Temperaturfühler, meist im wärmsten Bereich angeordnet, die Heizung noch nicht aktivieren würde. Der Fühler 4 sorgt dabei für die Vermeidung von unerwünschten Temperaturüberhöhungen über den gespeicherten Wert der Ladetemperatur, z.B. durch Aufschaukelung bei öfteren kleineren Wasserentnahmen aus Warm-

wasserbereitern. Bei Überschreiten der vorbestimmten Ladetemperatur, allenfalls einer anderen vorbestimmten Grenztemperatur, wird vorzugsweise die Schalteinheit der Heizung automatisch angesteuert und dabei die Heizung unterbrochen. Eine gegebenenfalls zusätzliche Taste oder ähnliches Schaltelement 10 ermöglicht die Ansteuerung einer Starkheizung zur Schnellaufladung des Wärmeinhaltes des Mediums, beispielsweise bei erhöhtem Warmwasserbedarf innerhalb kurzer Zeit, wobei dieser Betriebszustand zweckmäßigerweise ebenfalls über eine geeignete Anzeige, zum Beispiel geeignete Symbole 7''' in der optischen Anzeigeeinheit 7 signalisiert wird.

Eine weitere Anwendung bietet sich in der Vorprogrammierung einer bestimmten Temperatur für eine bestimmte Zeiteinheit. Bei Verwendung eines Mikrorechners kann wieder mittels Schaltelemente 9 z.B. für eine wählbare Anzahl von Tagen eine Senkung der Ladetemperatur eingestellt werden.

## Patentansprüche

1. Meßwerterfassungssystem für den Wärmeinhalt des Mediums wärmespeichernder Geräte, wie beispielsweise Warmwasserbereiter, Nacht- oder Pufferspeicher, mit einem Meßfühler zur Ermittlung des Wärmeinhaltes, dadurch gekennzeichnet, daß eine elektronische Schaltung (5) vorgesehen und mit dem Meßfühler (4) verbunden ist, in welcher die Masse oder das Volumen sowie charakteristische Temperaturwerte des Mediums, vorzugsweise die Ladetemperatur und die Abgabetemperatur sowie charakteristische Mengeneinheiten des Mediums, repräsentiert sind und die das Signal des Meßfühlers unter Berücksichtigung der repräsentierten Werte in ein dem Wärmeinhalt des Mediums in einer vorbestimmten Mengeneinheit des Mediums proportionales Signal umwandelt.

2. Meßwerterfassungssystem nach Anspruch 1, dadurch gekennzeichnet, daß die elektronische Schaltung (5) einen Signalgenerator, beispielsweise einen Schmitt-Trigger (IC 2a), zur Erzeugung von Rechteckimpulsen für eine Vergleichsschaltung, vorzugsweise eine Meßbrückenschaltung (M), aufweist, der Meßfühler (4) zur Ermittlung des Wärmeinhaltes einen Teil der Vergleichsschaltung (M) bildet und der Vergleichsschaltung (M) eine Verstärkerstufe, vorzugsweise ein Operationsverstärker (IC 3), nachgeschaltet ist, an deren Ausgang das dem Wärmeinhalt des Mediums in einer vorbestimmten Einheit proportionale Signal anliegt.

3. Meßwerterfassungssystem nach Anspruch 1, dadurch gekennzeichnet, daß die elektronische Schaltung (5) einen A/D-Wandler enthält, der eingangsseitig mit dem Meßfühler zur Ermittlung des Wärmeinhaltes und ausgangsseitig mit einem Mikrorechner verbunden ist, und der Mikrorechner ein Verarbeitungsprogramm zur Abfrage des Meßfühlers und zur Berechnung eines dem Wärmeinhalt des Mediums in einer vorbestimmten Einheit proportionalen Wertes enthält.

4. Meßwerterfassungssystem nach Anspruch 3, dadurch gekennzeichnet, daß die elektronische Schaltung eine mit dem Mikroprozessor verbundene Speichereinrichtung umfaßt, in der zumindest die Werte für die Masse oder das Volumen des Mediums, allenfalls auch für die Ladetemperatur des Mediums, abgelegt sind.

5. Meßwerterfassungssystem nach Anspruch 1, wobei zusätzlich ein Temperaturmeßfühler für die Temperatur des Mediums vorhanden ist, dadurch gekennzeichnet, daß die Schaltung (5) mit dem Temperaturmeßfühler (6) verbunden ist und den gemessenen Temperaturwert abfrägt und zur Bestimmung des dem Wärmeinhalt proportionalen Signals heranzieht.

6. Meßwerterfassungssystem nach Anspruch 1, dadurch gekennzeichnet, daß die elektronische Schaltung (5) eine Ausgabeeinheit (7) umfaßt, an deren Eingang das dem Wärmeinhalt proportionale Signal angelegt ist.

7. Meßwerterfassungssystem nach Anspruch 6, dadurch gekennzeichnet, daß die Ausgabeeinheit (7) zumindest eine optische Anzeige (7', 7'', 7''') beispielsweise eine LC-Anzeige zur Darstellung von Zeichen und Piktogrammen, allenfalls eine akustische Einheit, beispielsweise unter Verwendung eines Sprachgenerators, umfaßt.

8. Meßwerterfassungssystem nach Anspruch 6, dadurch gekennzeichnet, daß die Ausgabeeinheit (7) mittels zumindest eines Schaltelementes (8) auf verschiedene Anzeigearten bzw. Moden, beispielsweise Anzeige des Wärmeinhaltes, der aktuellen Temperatur, der Ladetemperatur, etc., umschaltbar ist.

9. Meßwerterfassungssystem nach Anspruch 1, dadurch gekennzeichnet, daß die elektronische Schaltung (5) einen Steuerausgang zur Ansteuerung der Schalteinheit (3) der Heizung bzw. des elektronischen Temperatur-Regelkreises aufweist.

10. Meßwerterfassungssystem nach zumindest einem der vorangehenden Ansprüche, dadurch gekennzeichnet, daß die Speichereinrichtung über zumindest ein Schaltelement (9, 10) zur Veränderung zumindest eines der gespeicherten Werte, vorzugsweise der Ladetemperatur, ansteuerbar ist.

11. Verfahren zum Betreiben eines Meßwerterfassungssystems nach Anspruch 1, dadurch gekennzeichnet, daß der Meßfühler für den Wärmeinhalt periodisch, vorzugsweise alle 10 bis 30 Sekunden, abgefragt wird und entweder automatisch bei jeder Abfrage oder aufgrund von Steuersignalen über ein Schaltelement das Signal des Meßfühlers in das dem Wärmeinhalt des Mediums proportionale Signal umgewandelt und dieses allenfalls gespeichert wird.

12. Verfahren nach Anspruch 11, dadurch gekennzeichnet, daß die Zeit zwischen zwei Meßwertabfragen bei starker Änderung des Meßwertes verringert wird, vorzugsweise auf 2 bis 10 Sekunden.

13. Verfahren nach Anspruch 11, dadurch gekennzeichnet, daß das dem Wärmeinhalt proportionale Signal automatisch oder aufgrund von Steuersignalen über ein Schaltelement an Zusatzeinrichtungen, wie beispielsweise die Ausgabeeinheit, die Schalteinheit der Heizung oder der elektronischen Temperatur-Regelkreis weitergeleitet wird.

14. Verfahren nach Anspruch 13, dadurch gekennzeichnet, daß bei Überschreiten der vorbestimmten Ladetemperatur des Mediums oder einer vorbestimmten Grenztemperatur automatisch die Ausgabeeinheit angesteuert und der aktuelle Temperaturwert ausgegeben wird, vorzugsweise auch automatisch die Schalteinheit der Heizung oder der elektronische Temperatur-Regelkreis angesteuert und die Heizung unterbrochen wird.

15. Verfahren nach Anspruch 13, dadurch gekennzeichnet, daß bei Veränderung der Ladetemperatur des Mediums die Ausgabeeinheit (7) automatisch den neuen Wert der Ladetemperatur und bzw. oder den neuen Wert des Wärmeinhaltes bei Volladung in einer vorbestimmten Einheit anzeigt.

Fig.1

Fig.2

Fig.3